(19) Europäisches Patentamt / European Patent Office / Office européen des brevets

(11) **EP 4 244 781 B1**

(12) **FASCICULE DE BREVET EUROPEEN**

(45) Date de publication et mention de la délivrance du brevet:
**17.04.2024 Bulletin 2024/16**

(21) Numéro de dépôt: **21851618.5**

(22) Date de dépôt: **16.12.2021**

(51) Classification Internationale des Brevets (IPC):
**G06N 10/70** *(2022.01)* **G06N 10/40** *(2022.01)*

(52) Classification Coopérative des Brevets (CPC):
**G06N 10/40; G06N 10/70**

(86) Numéro de dépôt international:
**PCT/FR2021/052371**

(87) Numéro de publication internationale:
**WO 2022/129807 (23.06.2022 Gazette 2022/25)**

(54) **SYSTEME DE COMMANDE D'UN ETAT D'UN OSCILLATEUR HARMONIQUE QUANTIQUE**

STEUERSYSTEM FÜR DEN ZUSTAND EINES QUANTENHARMONISCHEN OSZILLATORS

CONTROL SYSTEM FOR A STATE OF A QUANTUM HARMONIC OSCILLATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2020 FR 2013755**

(43) Date de publication de la demande:
**20.09.2023 Bulletin 2023/38**

(73) Titulaires:
- **Université Claude Bernard Lyon 1**
  **69100 Villeurbanne (FR)**
- **Centre National de la Recherche Scientifique (CNRS)**
  **75016 Paris (FR)**
- **Ecole Normale Supérieure de Lyon**
  **69007 Lyon (FR)**

(72) Inventeurs:
- **PERONNIN, Théau**
  **75012 PARIS (FR)**
- **HUARD, Benjamin**
  **69008 LYON (FR)**
- **JEZOUIN, Sébastien**
  **75009 PARIS (FR)**
- **MARQUET, Antoine**
  **69007 LYON (FR)**

(74) Mandataire: **Cabinet Netter**
**36, avenue Hoche**
**75008 Paris (FR)**

(56) Documents cités:
- **RAPHA\"EL LESCANNE ET AL: "Exponential suppression of bit-flips in a qubit encoded in an oscillator", ARXIV.ORG, CORNELL UNIVERSITY LIBRARY, 201 OLIN LIBRARY CORNELL UNIVERSITY ITHACA, NY 14853, 26 juillet 2019 (2019-07-26), XP081450286, cité dans la demande**
- **Gertler Jeffrey M ET AL: "Protecting a bosonic qubit with autonomous quantum error correction", Nature (London), 20 avril 2020 (2020-04-20), pages 243-248, XP055813171, England DOI: 10.1038/s41586-021-03257-0 Extrait de l'Internet: URL:https://arxiv.org/pdf/2004.09322v1.pdf [extrait le 2021-06-11] cité dans la demande**
- **J\'ER\'EMIE GUILLAUD ET AL: "Repetition Cat Qubits for Fault-Tolerant Quantum Computation", ARXIV.ORG, CORNELL UNIVERSITY LIBRARY, 201 OLIN LIBRARY CORNELL UNIVERSITY ITHACA, NY 14853, 20 avril 2019 (2019-04-20), XP081557716, DOI: 10.1103/PHYSREVX.9.041053**

## Description

### DOMAINE DE L'INVENTION

L'invention concerne le traitement de l'information quantique.

Elle concerne notamment la correction d'erreurs dans le codage d'information de type bosonique, c'est-à-dire le codage qui encode de l'information dans un système bosonique ayant une dimension, au sens de l'espace de Hilbert, plus grande que les deux états nécessaires pour encoder un bit d'information. Il s'agit par exemple de la correction d'erreurs dans des protocoles où le codage d'information utilise uniquement des états de chat de Schrödinger d'un oscillateur harmonique, c'est-à-dire une superposition de deux (ou davantage) états cohérents de l'oscillateur harmonique.

Elle concerne aussi notamment la préparation d'états ont la parité du nombre de bosons est donnée.

### ETAT DE LA TECHNIQUE

La mise en oeuvre d'un traitement d'information quantique nécessite de mettre en place des protocoles de correction d'erreur permettant de corriger les changements indésirables de l'état des bits quantiques (ou qubits) qui se produisent inévitablement en raison de leur couplage au monde extérieur. Toutes les erreurs qui peuvent se produire sur un qubit qui est un état dont l'expression générale est $a|0\rangle+b|1\rangle$, sont toujours des combinaisons d'une erreur de type « bit-flip » qui produit l'état $a|1\rangle+b|0\rangle$ et d'une erreur de type « phase-flip » qui produit l'état $a|0\rangle-b|1\rangle$.

Dans le codage d'information de type bosonique, on connaît un procédé de correction des erreurs de type bit-flip utilisant un dispositif de dissipation multiphotonique (Lescanne, R., Villiers, M., Peronnin, T. et al. Exponential suppression of bit-flips in a qubit encoded in an oscillator. Nat. Phys. 16, 509-513 (2020)). L'information est encodée dans un état de type chat de Schrödinger d'un oscillateur harmonique et la correction se fonde sur une ingénierie de l'interaction entre l'oscillateur harmonique et son environnement. En rapport avec cette correction des bit-flips, le procédé permet d'augmenter le temps caractéristique entre deux erreurs de bit-flip se produisant sur l'état portant l'information, l'augmentation étant exponentielle en fonction de la taille du chat, c'est-à-dire en fonction du nombre moyen de bosons compris dans l'oscillateur harmonique. En revanche le temps caractéristique entre deux erreurs de type phase-flip, qui ne sont pas corrigées par la dissipation multiphotonique, décroît linéairement en fonction de la taille du chat.

On connaît également un procédé de correction de certaines erreurs liées à la perte d'un boson dans un oscillateur harmonique utilisant notamment un protocole de maintien de la parité du nombre de bosons (GERTLER Jeffrey M. et al. « Protecting a Bosonic Qubit with Autonomous Quantum Error Correction » <https://arxiv.org/abs/2004.09322». Cette fois, la correction se fonde sur un couplage dispersif de l'oscillateur harmonique à un dispositif auxiliaire comme par exemple un transmon. Selon la façon dont un qubit est encodé dans l'oscillateur harmonique, le maintien de la parité peut être utilisé pour stabiliser certains canaux d'erreur du qubit ou pour stabiliser de façon déterministe un état du qubit. Le temps de vie ou la pureté de l'état portant l'information augmente de manière linéaire en fonction de la puissance de couplage entre l'oscillateur et le dispositif auxiliaire.

Par ailleurs, on connaît un procédé de préparation d'états quantiques arbitraires du résonateur quantique utilisant le couplage dispersif entre un qubit et un résonateur (FOSEL Thomas et al. « Efficient cavity control with SNAP gates » https://arxiv.org/abs/2004.14256). Le protocole utilise des portes de phase conditionnées au nombre de bosons dans le résonateur quantique ainsi que des déplacements du mode de résonance.

### EXPOSE DE L'INVENTION

On prévoit selon l'invention un système de commande d'un état de l'oscillateur harmonique quantique comprenant :

- un oscillateur harmonique quantique configuré pour porter une information encodée dans un état de l'oscillateur de type chat de Schrödinger,
- un dispositif de stabilisation d'une parité prédéterminée d'un nombre de bosons de l'état, configuré pour utiliser des premier et deuxième peignes de fréquences, les premier et deuxième peignes de fréquence comportant chacun au moins autant de raies qu'un nombre moyen de bosons dans l'état de l'oscillateur de type chat de Schrödinger, et
- un dispositif de dissipation multiphotonique adapté pour retirer au moins une paire de bosons simultanément de l'oscillateur,

le dispositif de dissipation multiphotonique étant agencé de sorte qu'il est activé seulement sur des périodes d'activation comprises entre deux pics temporels successifs des premier et deuxième peignes de fréquences,
la période d'activation présentant une durée supérieure à l'inverse du produit d'un nombre moyen de bosons dans l'état de l'oscillateur de type chat de Schrödinger et de l'inverse du temps caractéristique séparant le retrait d'au moins une paire de bosons simultanément de l'oscillateur par dissipation multiphotonique,
une durée séparant deux périodes d'activation successives étant inférieure à un temps caractéristique de perte d'un boson dans l'oscillateur harmonique.

Un tel système est avantageusement complété par les différentes caractéristiques ou étapes suivantes prises seules ou en combinaison :

- les périodes d'activation sont ajustées de sorte qu'une localisation de l'état dans une représentation de Wigner modifiée pendant les périodes d'activation du dispositif de stabilisation est rétablie par le dispositif de dissipation ;
- un premier écart fréquentiel séparant deux raies successives du premier peigne de fréquences et un deuxième écart fréquentiel séparant deux raies successives du deuxième peigne sont supérieurs à l'inverse du temps caractéristique de perte d'un boson dans l'oscillateur harmonique ;
- un premier écart fréquentiel séparant deux raies successives du premier peigne de fréquences est égal au double d'un deuxième écart fréquentiel séparant deux raies successives du deuxième peigne ;
- les premier et deuxième peignes présentent des pics dans le domaine temporel, les pics du premier peigne étant décalés temporellement par rapport aux pics du deuxième peigne ;
- l'oscillateur harmonique quantique est un premier résonateur micro-onde supraconducteur, le dispositif de stabilisation comprenant :

  -- un transmon,
  -- un deuxième résonateur micro-onde supraconducteur ayant un facteur de qualité inférieur à un facteur de qualité du premier résonateur micro-onde supraconducteur, et
  -- un exciteur adapté pour émettre les premier et deuxième peignes de fréquences,
  le dispositif de dissipation multiphotonique comprenant :

    -- un dissipateur tel qu'un troisième résonateur micro-onde supraconducteur ayant un facteur de qualité inférieur à un facteur de qualité du premier résonateur micro-onde supraconducteur,
    -- une source de pompage et

  - un circuit de couplage adapté pour coupler le dissipateur et l'oscillateur, le dispositif de dissipation étant activable lorsque le circuit de couplage reçoit une énergie de pompage de la source de pompage.

L'invention porte également sur un procédé de commande d'un état d'un oscillateur harmonique quantique comprenant les étapes simultanées suivantes:

- stabilisation d'une parité prédéterminée d'un nombre de bosons d'un état de type chat de Schrödinger de l'oscillateur, la stabilisation comprenant une génération des premier et deuxième peignes de fréquences, les premier et deuxième peignes de fréquence comportant chacun au moins autant de raies qu'un nombre moyen de bosons dans l'état de l'oscillateur de type chat de Schrödinger, et
- dissipation multiphotonique de sorte à retirer au moins une paire de bosons simultanément de l'oscillateur,

la dissipation multiphotonique étant activée seulement sur des périodes d'activation comprises entre deux pics temporels successifs des premier et deuxième peignes de fréquences,
la période d'activation présentant une durée supérieure à l'inverse du produit d'un nombre moyen de bosons dans l'état de l'oscillateur de type chat de Schrödinger et de l'inverse du temps caractéristique séparant le retrait d'au moins une paire de bosons simultanément de l'oscillateur par dissipation multiphotonique, une durée séparant deux périodes d'activation successives étant inférieure à un temps caractéristique de perte d'un boson dans l'oscillateur harmonique.

## DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :

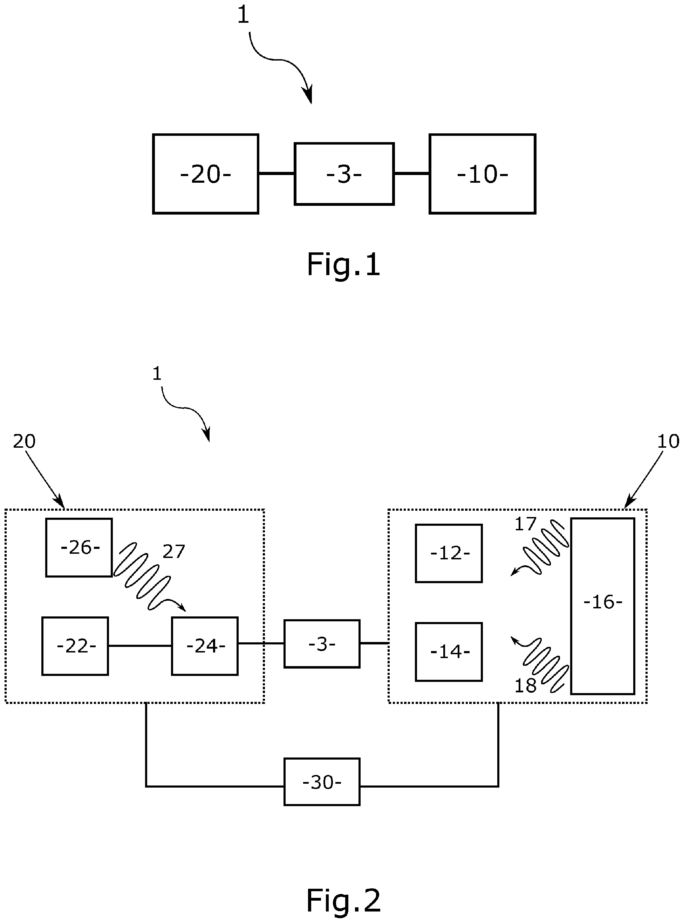

Les figures 1 et 2 sont des représentations schématiques d'un système de commande d'un état de l'oscillateur harmonique quantique selon deux modes de réalisation de l'invention.

## DESCRIPTION DETAILLEE DE L'INVENTION

### Système de commande de l'état d'un oscillateur harmonique quantique

Un système 1 de commande de l'état d'un oscillateur harmonique est représenté schématiquement en figure 1.
Le système 1 comprend un oscillateur harmonique quantique 3, un dispositif de stabilisation de la parité 10 et un dispositif de dissipation multiphotonique 20. Un oscillateur harmonique quantique et un dispositif de stabilisation de parité ont été présentés dans la demande FR-2 009 795 à laquelle on pourra se référer pour plus de détails.

### Oscillateur harmonique

Un oscillateur harmonique peut être dans un état |k>, où k est un entier et représente le nombre de bosons k contenus dans l'oscillateur.
Le terme oscillateur harmonique peut également désigner un résonateur, les deux termes étant utilisés indifféremment avec la même signification dans ce texte.

Le dispositif de stabilisation permet de stabiliser une parité prédéterminée du nombre de bosons d'un oscillateur harmonique quantique de manière autonome. En particulier on cherchera à stabiliser la parité d'un état de chat à deux ou quatre pattes. La stabilisation des états de chat à deux pattes permet notamment la préparation d'état et la stabilisation des états de chat à quatre pattes permet notamment la suppression des phase-flip.

L'état de chat à quatre pattes est défini comme la superposition de quatre états cohérents de l'oscillateur harmonique quantique dont les phases diffèrent d'une valeur de $\pi/2$. Lorsqu'un chat à quatre pattes est décomposé sur les états |k>, les seuls coefficients non nuls correspondent à des nombres p de bosons congrus à n modulo 4, où n est un entier prédéterminé qui peut valoir 0, 1, 2 ou 3. Chaque valeur de l'entier prédéterminé n définit un chat à quatre pattes. Il existe donc quatre chats à quatre pattes.

Les chats à quatre pattes correspondant à l'entier prédéterminé n égal à 0 ou à 2 peuvent permettre de définir un premier qubit logique.

Les chats à quatre pattes correspondant à l'entier prédéterminé n égal à 1 ou à 3 définissent un second qubit logique.

Un changement de parité (causé par exemple par une perte ou un gain d'un boson dans l'oscillateur harmonique) dans un qubit logique est équivalent à un changement du qubit logique. Autrement dit la perte ou le gain d'un boson dans l'oscillateur harmonique fait passer du premier qubit logique au second qubit logique et inversement.

L'état de chat à deux pattes est défini comme la superposition de deux états cohérents de l'oscillateur harmonique quantique dont les phases diffèrent d'une valeur de $\pi$. Lorsqu'un chat à deux pattes est décomposé sur les états |k>, les seuls coefficients non nuls correspondent à des nombres p de bosons congrus à n modulo 2, où n est un entier prédéterminé qui peut valoir 0 ou 1.

Chaque valeur de l'entier prédéterminé n définit un chat à deux pattes. Il existe donc deux chats à deux pattes qui peuvent être utilisés pour réaliser un qubit, l'état chat à deux pattes n=1 et l'état chat à deux pattes n=0.

Dans ce cas, on peut définir un qubit logique où l'état chat à deux pattes n=0 est le 0 logique et l'état chat à deux pattes n=1 le 1 logique. Un changement de parité (causé par exemple par une perte ou un gain d'un boson dans le résonateur) correspond à un bit flip du qubit logique. Autrement dit, la perte d'un photon fait passer de l'état chat à deux pattes n=1 à l'état chat à deux pattes n=0 et inversement.

## Dispositif de stabilisation de parité

Le dispositif de stabilisation de parité comprend un dispositif auxiliaire non-linéaire qui est couplé de manière dispersive à l'oscillateur harmonique quantique.

Le dispositif auxiliaire peut être dans un niveau stable |g>, et au moins un niveau excité |f>. Le couplage dispersif entre l'oscillateur harmonique et le dispositif auxiliaire signifie que la différence d'énergie ou, de manière équivalente, la différence de fréquence $\omega_{gf}(k)$ entre l'état ou le niveau fondamental |g> et l'état ou le niveau excité |g> dépend de manière linéaire du nombre k de bosons dans l'oscillateur harmonique quantique.

Le dispositif de stabilisation comprend aussi un dissipateur, comportant au moins un état stable et un autre état excité qui relaxe spontanément vers l'état stable. Cette relaxation spontanée permet de rendre, au cours du protocole de commande de l'état de l'oscillateur, des déplacements de population irréversibles.

Le dispositif de stabilisation comprend également un excitateur configuré pour créer deux peignes de fréquences. Les peignes de fréquence sont en résonance avec certaines transitions des niveaux d'énergie du système formé par l'oscillateur harmonique, le dispositif auxiliaire et le dissipateur. Ils permettent d'ajouter un boson dans l'oscillateur harmonique si l'entier k n'a pas la parité prédéterminée.

L'écart fréquentiel séparant deux raies successives du premier peigne de fréquences peut être égal au double d'un deuxième écart fréquentiel séparant deux raies successives du deuxième peigne, comme présenté dans la demande FR 2009795.

L'écart fréquentiel séparant deux raies successives du premier peigne de fréquences peut être égal au deuxième écart fréquentiel séparant deux raies successives du deuxième peigne, comme présenté dans GERTLER Jeffrey M. et al. « Protecting a Bosonic Qubit with Autonomous Quantum Error Correction » <https://arxiv.org/abs/2004.09322>.

Si dans le domaine fréquentiel un peigne de fréquences est constitué de raies régulièrement séparées par un écart fréquentiel, dans le domaine temporel ce peigne de fréquences est constitué de pics séparés par un écart temporel inversement proportionnel à l'écart fréquentiel. On utilise le terme de raie pour le domaine fréquentiel et le terme de pic pour le domaine temporel.

Ce dispositif de stabilisation permet de maintenir la parité du nombre de bosons dans l'oscillateur harmonique quantique de manière autonome. Aucune intervention de l'expérimentateur, à l'intérieur du système quantique, n'est nécessaire pour que la stabilisation soit assurée.

## Dispositif de dissipation multiphotonique

Le système de commande d'état de l'oscillateur harmonique quantique comprend également un dispositif de dissipation multiphotonique 20 adapté pour retirer au moins une paire de bosons simultanément de l'oscillateur harmonique 3.

Le dispositif de dissipation multiphotonique 20 permet d'obtenir un certain taux de dissipation multiphotonique qui désigne l'inverse du temps caractéristique séparant la perte simultanée de deux ou quatre (ou un autre nombre entier supérieur à un) bosons par l'oscillateur harmonique quantique.

Comme décrit dans l'article Lescanne, R., Villiers, M., Peronnin, T. et al. Exponential suppression of bit-flips in a qubit encoded in an oscillator. Nat. Phys. 16, 509-513 (2020), cette dissipation de bosons par paires a pour effet de séparer les qubits portant l'information dans des zones particulières de l'espace des phases, c'est-à-dire dans des zones particulières dans la représentation de Wigner. Plus cette dissipation est importante, plus forte est la séparation entre les qubits, et plus il est difficile de passer d'un qubit à l'autre, c'est-à-dire de faire une erreur de type bit-flip.

Le dispositif de dissipation peut être contrôlé de sorte que l'on peut régler l'importance du phénomène de dissipation. En particulier, le phénomène de dissipation multiphotonique peut être rendu négligeable.

Il est donc possible d'allumer ou d'éteindre le dispositif de dissipation multiphotonique 20, de sorte à l'activer seulement sur certaines périodes d'activation.

Préparation d'états de l'oscillateur harmonique

Le système 1 de commande de l'état d'un oscillateur harmonique peut être utilisé pour préparer des états particuliers de l'oscillateur, et notamment les états de chat de Schrödinger à deux pattes.

Un changement de parité (causé par exemple par une perte ou un gain d'un boson dans l'oscillateur harmonique) du chat à deux pattes induit un changement de l'état du qubit logique. L'état chat à deux pattes n=1 devient l'état chat à deux pattes n=0 et inversement.

En utilisant le dispositif de stabilisation de parité, on peut choisir de maintenir la parité paire. Dans ce cas, la perte d'un boson, par exemple un photon, amènera l'état chat à deux pattes n=1 dans l'état chat à deux pattes n=0 tandis que l'état chat à deux pattes n=0 ne conduira pas à un changement de parité. Naïvement on peut donc s'attendre alors à ce que tout état converge vers l'état chat à deux pattes n=0 de façon déterministe, ce qui permet de préparer cet état.

Cependant, le protocole de maintien de la parité a aussi pour effet d'affecter les phases relatives entre les superpositions des différents états de Fock « k » de l'oscillateur harmonique quantique. Ainsi, le protocole de maintien de la parité permet de préparer de façon déterministe un état ayant une certaine parité, mais cet état n'est pas un état de chat à deux pattes, quand bien même l'état initial en serait un.

Pour remédier à ce problème, les inventeurs proposent de mettre en place un processus de dissipation à deux photons simultanément. Parmi l'ensemble des états possibles de l'oscillateur harmonique quantique ayant la parité paire, cette dissipation à deux photons permet de stabiliser l'état chat à deux pattes n=0. De la même manière, parmi l'ensemble des états possibles de l'oscillateur harmonique quantique ayant la parité impaire, cette dissipation à deux photons permet de stabiliser l'état chat à deux pattes n=1.

Avec le protocole de maintien de la parité et la dissipation à deux photons fonctionnant simultanément, il est ainsi possible de préparer de façon déterministe l'état chat à deux pattes n=0 ou l'état chat à deux pattes n=1, quel que soit l'état initial de l'oscillateur harmonique quantique.

Alternance temporelle des périodes d'activation et des pics de peignes de fréquences

Selon l'invention, le dispositif de dissipation multiphotonique et le dispositif de stabilisation de la parité sont contrôlés de manière temporelle de sorte que les périodes d'activation du dispositif de dissipation ne recouvrent aucun pic temporel du premier peigne de fréquences ou du deuxième peigne de fréquences.

Les périodes d'activation sont ajustées de sorte qu'une localisation de l'état dans une représentation de Wigner modifiée pendant les périodes d'activation du dispositif de stabilisation est rétablie par le dispositif de dissipation.

Dans la représentation de Wigner d'un état de chat à quatre pattes les quatre états cohérents de l'oscillateur harmonique quantique, dont la superposition définit l'état de chat à quatre pattes, sont localisés autour des phases 0°, 90°, 180° et 270°.

Lorsque la dissipation multiphotonique est inactive, il y a une dérive en phase de l'état de l'oscillateur.

Lorsque la dissipation multiphotonique est active, l'état de l'oscillateur harmonique est attiré et ramené vers celui des quatre états cohérents dont la phase est la plus proche.

Le résultat selon lequel la localisation de l'état dans une représentation de Wigner modifiée pendant les périodes d'activation du dispositif de stabilisation est rétablie par le dispositif de dissipation, peut par exemple être obtenu lorsque :

- (a) chaque peigne de fréquence comporte au moins autant de raies que le nombre moyen de bosons correspondant à la taille du chat,
- (b) la durée pendant laquelle la dissipation multiphotonique est inactive est inférieure au temps caractéristique séparant deux erreurs successives de type « bit-flip », et
- (c) la durée pendant laquelle la dissipation multiphotonique est active est supérieure à l'inverse du produit du nombre moyen de bosons correspondant à la taille du chat et du taux de dissipation multiphotonique.

Les deux premières caractéristiques (a) et (b) permettent que la dérive de phase de l'état, pendant que la dissipation multiphotonique est inactive, est inférieure à 45°.

La troisième caractéristique (c) permet que la dissipation multiphotonique est active suffisamment longtemps pour réduire cette dérive de phase.

Si l'une des caractéristiques est absente, alors le taux d'erreur de type « bit-flip » ou « phase-flip » augmente, c'est-à-dire que le temps caractéristique séparant deux erreurs successives de type « bit-flip » ou « phase-flip » diminue. Tout cela est réglé avant la mise en oeuvre du protocole de commande de l'état de l'oscillateur harmonique quantique.

Dans la représentation de Wigner d'un état de chat à deux pattes les deux états cohérents de l'oscillateur harmonique quantique, dont la superposition définit l'état de chat à deux pattes, sont localisés autour des phases 0° et 180°. Lorsque la dissipation multiphotonique est inactive, il y a une dérive en phase de l'état de l'oscillateur.

Lorsque la dissipation multiphotonique est active, l'état de l'oscillateur harmonique est attiré et ramené vers celui des deux états cohérents dont la phase est la plus proche.

Le résultat selon lequel la localisation de l'état dans une représentation de Wigner modifiée pendant les périodes d'activation du dispositif de stabilisation est rétablie par le dispositif de dissipation, peut par exemple être obtenu lorsque :

- (a) chaque peigne de fréquence comporte au moins autant de raies que le nombre moyen de bosons correspondant à la taille du chat,
- (b) la durée pendant laquelle la dissipation multiphotonique est inactive est inférieure au temps caractéristique de perte d'un boson, et
- (c) la durée pendant laquelle la dissipation multiphotonique est active est supérieure à l'inverse du produit du nombre moyen de bosons correspondant à la taille du chat et du taux de dissipation multiphotonique.

Les deux premières caractéristiques (a) et (b) permettent que la dérive de phase de l'état, pendant que la dissipation multiphotonique est inactive, est inférieure à 90°.

La troisième caractéristique (c) permet que la dissipation multiphotonique est active suffisamment longtemps pour réduire cette dérive de phase.

Le temps caractéristique de perte d'un boson est le temps typique moyen séparant deux pertes successives d'un boson dans l'oscillateur harmonique en absence de tout procédé de correction.

Si l'une des caractéristiques est absente, alors le taux la probabilité que la parité ait la valeur prédéterminée diminue et la superposition entre les états de Fock « k » n'est plus la bonne. Celui conduit à une réduction de la pureté de l'état préparé.

Tout cela est réglé avant la mise en oeuvre du protocole de commande de l'état de l'oscillateur harmonique quantique.

L'alternance temporelle entre le dispositif de dissipation multiphotonique et le dispositif de stabilisation de la parité est intéressante pour combiner les effets correcteurs des deux procédés pour résister aux erreurs de type bit-flip et de type phase-flip, ou bien pour préparer un état de parité donnée.

A priori, ces deux procédés apparaissaient difficiles à utiliser ensemble, car le couplage dispersif peut, dans certains cas, provoquer des erreurs de type bit-flip et son action est donc empêchée par le dispositif de dissipation multiphotonique. Le fait que la dissipation est désactivée lorsqu'un pic du peigne associé au maintien de la parité est envoyée permet que dissipation multiphotonique et maintien de la parité ne sont jamais activés simultanément. L'action de l'un n'est donc pas empêchée par l'action de l'autre.

Par ailleurs, les périodes d'activation de la dissipation multiphotonique sont ajustées pour qu'une localisation de l'état dans une représentation de Wigner détériorée par l'étape de stabilisation de parité puisse être rétablie lors de l'étape de dissipation multiphotonique. De cette manière, les effets contraires de la dissipation multiphotonique et de la stabilisation de parité peuvent être équilibrés.

## Peignes de fréquences à haute cadence temporelle

Plus longtemps la dissipation multiphotonique est inactive, et plus la probabilité d'une erreur irréparable augmente. Une erreur est irréparable par la dissipation multiphotonique en particulier lorsqu'elle produit une dérive en phase de l'état de l'oscillateur supérieure à 45° ou 90° alors que la dissipation multiphotonique est inactive.

Pour limiter l'occurrence des erreurs irréparables, le premier écart fréquentiel et le deuxième écart fréquentiel sont choisis aussi importants que possible. En effet, plus ces écarts sont importants et plus les pics temporels des peignes de fréquence sont courts et proches les uns des autres, autrement dit plus la cadence des pics temporels est importante.

En imposant une cadence plus élevée des pics temporels, les périodes d'activation du dispositif de dissipation multiphotonique peuvent alors être plus longues et plus rapprochées les unes des autres. Dans cette situation la dissipation multiphotonique est plus souvent active, et la durée pendant laquelle une erreur irréparable peut se produire est ainsi réduite.

On choisit donc le premier écart fréquentiel et le deuxième écart fréquentiel supérieurs au taux d'occurrence des erreurs de type « perte d'un boson », c'est-à-dire l'inverse du temps caractéristique de perte d'un boson dans l'oscillateur harmonique.

## Décalage temporel entre les peignes de fréquences

Il est possible de configurer l'excitateur de sorte qu'il génère les premier et deuxième peignes de fréquences avec les pics du premier peigne décalés temporellement par rapport aux pics du deuxième peigne.

Le décalage temporel peut être caractérisé par la durée D séparant un pic du premier peigne de fréquences et le premier pic du deuxième peigne de fréquence qui suit temporellement le pic négatif.

Dans le cas où le premier écart fréquentiel est égal au double du deuxième écart fréquentiel, des choix du décalage temporel D ont été précisés dans la demande FR 2009795. Ces choix permettent de diminuer un canal d'altération dont l'effet est d'ajouter un boson dans l'oscillateur quand cela est indésirable.

Dans le cas où le premier écart fréquentiel est égal au deuxième écart fréquentiel, on note x cet écart fréquentiel. Il est possible de configurer l'excitateur de sorte qu'il génère le premier et le deuxième peignes de fréquences avec les pics du premier peigne décalés temporellement par rapport aux pics du deuxième peigne.

Le décalage temporel peut être caractérisé par la durée D séparant un pic du premier peigne de fréquences et le premier pic du deuxième peigne de fréquence qui suit temporellement ce pic du premier peigne.

Le décalage temporel D peut être choisi librement dans l'intervalle $\left[0; \frac{2\pi}{\chi}\right]$. Le décalage temporel D peut être avantageusement choisi dans l'intervalle $\left[\frac{\delta_1+\delta_2}{2}; \frac{\pi}{\chi} - \frac{\delta_1+\delta_2}{2}\right]$ ou l'intervalle $\left[\frac{\pi}{\chi} + \frac{\delta_1+\delta_2}{2}; \frac{2\pi}{\chi} - \frac{\delta_1+\delta_2}{2}\right]$ où $\delta_1$ et $\delta_2$ désignent respectivement la largeur à mi-hauteur des pics du premier peigne et du deuxième peigne.

## Nombre moyen de bosons

Comme précédemment mentionné, les premier et deuxième peignes de fréquences comportent chacun au moins autant de raies que le nombre moyen de bosons correspondant à la taille du chat.

Il est possible d'utiliser des peignes de fréquences qui comportent davantage de raies, notamment pour diminuer le taux d'erreur.

Plus le taux d'erreur souhaité est faible, et plus il convient d'utiliser des peignes de fréquences comportant un grand nombre de raies.

## Technologie des circuits supraconducteurs

Le procédé de commande de l'état de l'oscillateur harmonique quantique décrit ici peut, par exemple, être réalisé en utilisant la technologie des circuits supraconducteurs, comme représenté de manière schématique sur la figure 2. L'oscillateur harmonique quantique 3 peut alors être un résonateur micro-onde supraconducteur.

Le dispositif de stabilisation de parité 10 comprend un système auxiliaire qui peut être un transmon 14, et le dissipateur peut être un autre résonateur micro-onde supraconducteur 12 ayant, comparativement à l'oscillateur 3, un mauvais facteur de qualité. Le dispositif de stabilisation de parité comprend également un exciteur 16 adapté pour générer les peignes de fréquences 17 et 18.

La demande FR 2009795 décrit différents modes de réalisation, correspondant à un couple particulier d'état excité |f> du transmon et d'entier p (égal à un nombre de bosons échangés dans les transitions excitées par les peignes de fréquence), du dispositif de stabilisation en utilisant la technologie des supraconducteurs. Ces modes sont directement compatibles avec le procédé de commande d'un état de l'oscillateur harmonique présenté ici.

Le dispositif de dissipation multiphotonique 20 peut être réalisé selon les indications de l'article Lescanne, R., Villiers, M., Peronnin, T. et al. Exponential suppression of bit-flips in a qubit encoded in an oscillator. Nat. Phys. 16, 509-513 (2020).

En particulier, le dispositif de dissipation multiphotonique 20 peut comprendre un dissipateur 22. Ce dissipateur 22 peut par exemple être un résonateur micro-onde supraconducteur ayant, comparativement à l'oscillateur, un mauvais facteur de qualité.

Le dispositif de dissipation multiphotonique peut comprendre également un circuit ATS 24, le terme ATS signifiant en anglais *Asymmetrically Threaded SQUID,* c'est-à-dire un SQUID (pour *Superconducting Quantum Interférence Device* en anglais, c'est-à-dire dispositif supraconducteur quantique d'interférences) bobiné en asymétrique. Le circuit ATS 24 assure le couplage de l'oscillateur harmonique 3 avec le dissipateur 22.

Le dispositif de dissipation multiphotonique 20 comprend une source de pompage 26 du circuit ATS. La source de pompage 26 peut être contrôlée pour envoyer une énergie de pompage 27 vers le circuit ATS 24. Lorsqu'il reçoit l'énergie de pompage 27, le circuit ATS 24 couple le dissipateur 22 et l'oscillateur 3 et la dissipation multiphotonique a lieu. Lorsqu'il ne reçoit pas l'énergie de pompage 27, le circuit ATS 24 ne couple pas le dissipateur 22 et l'oscillateur 3 et la dissipation multiphotonique n'a pas lieu. Le contrôle de la source de pompage permet ainsi de définir les périodes d'activation de la dissipation multiphotonique.

Le dispositif de dissipation multiphotonique 20 comprend une source d'excitation du dissipateur 22. Cette source d'excitation permet d'ajuster le nombre moyen de bosons dans l'oscillateur harmonique 3, c'est-à-dire la taille du chat lorsque l'oscillateur harmonique est dans un état de type chat de Schrödinger. La source d'excitation du dissipateur 22 peut être synchronisée avec la source de pompage 26, c'est-à-dire que les deux sources sont actives et inactives au même moment. Ainsi, la source d'excitation n'envoie pas d'énergie dans le dissipateur, lorsque la source de pompage est inactive.

Le système de commande de l'état de l'oscillateur harmonique quantique peut enfin comprendre un contrôleur 30 qui contrôle le dispositif de stabilisation de parité 10 et le dispositif de dissipation multiphotonique 20. En particulier le contrôleur 30 peut assurer la synchronisation de la génération des peignes de fréquences 17, 18 par l'exciteur 16 et la génération de l'énergie de pompage 27 par la source de pompage 26.

Le contrôleur 30 peut notamment garantir que le dispositif de dissipation multiphotonique est activé seulement sur des périodes d'activation comprises entre deux pics temporels successifs des premier et deuxième peignes de fréquences.

Enfin, l'invention concerne un procédé de commande d'un état d'un oscillateur harmonique quantique comprenant les étapes simultanées : -stabilisation d'une parité prédéterminée d'un nombre de bosons d'un état de type chat de Schrödinger de l'oscillateur, la stabilisation comprenant une génération des premier et deuxième peignes de fréquences, et - dissipation multiphotonique de sorte à retirer au moins une paire de bosons simultanément de l'oscillateur,

> la dissipation multiphotonique étant activée seulement sur des périodes d'activation comprises entre deux pics temporels successifs des premier et deuxième peignes de fréquences,
> les périodes d'activation étant ajustées de sorte qu'une localisation de l'état dans une représentation de Wigner modifiée pendant les périodes d'activation de la stabilisation de la parité est rétablie par la dissipation multiphotonique.

**Revendications**

1. Système (1) de commande d'un état d'un oscillateur harmonique quantique comprenant :

> - un oscillateur harmonique quantique (3) configuré pour porter une information encodée dans un état de l'oscillateur de type chat de Schrödinger,
> - un dispositif de stabilisation (10) d'une parité prédéterminée d'un nombre de bosons de l'état, configuré pour utiliser des premier et deuxième peignes de fréquences, les premier et deuxième peignes de fréquence comportant chacun au moins autant de raies qu'un nombre moyen de bosons dans l'état de l'oscillateur de type chat de Schrödinger, et
> - un dispositif de dissipation multiphotonique (20) adapté pour retirer au moins une paire de bosons simultanément de l'oscillateur,
> le dispositif de dissipation multiphotonique étant agencé de sorte qu'il est activé seulement sur des périodes d'activation comprises entre deux pics temporels successifs des premier et

> deuxième peignes de fréquences,
> la période d'activation présentant une durée supérieure à l'inverse du produit du nombre moyen de bosons dans l'état de l'oscillateur de type chat de Schrödinger et de l'inverse du temps caractéristique séparant le retrait d'au moins une paire de bosons simultanément de l'oscillateur par dissipation multiphotonique,
> une durée séparant deux périodes d'activation successives étant inférieure à un temps caractéristique de perte d'un boson dans l'oscillateur harmonique.

2. Système selon la revendication 1 dans lequel les périodes d'activation sont ajustées de sorte qu'une localisation de l'état dans une représentation de Wigner modifiée pendant les périodes d'activation du dispositif de stabilisation est rétablie par le dispositif de dissipation.

3. Système selon la revendication 1 ou 2 dans lequel un premier écart fréquentiel séparant deux raies successives du premier peigne de fréquences et un deuxième écart fréquentiel séparant deux raies successives du deuxième peigne sont supérieurs à l'inverse du temps caractéristique de perte d'un boson dans l'oscillateur harmonique.

4. Système selon l'une des revendications 1 à 3 dans lequel un premier écart fréquentiel séparant deux raies successives du premier peigne de fréquences est égal au double d'un deuxième écart fréquentiel séparant deux raies successives du deuxième peigne.

5. Système selon l'une des revendications 1 à 4 dans lequel les premier et deuxième peignes présentent des pics dans le domaine temporel, les pics du premier peigne étant décalés temporellement par rapport aux pics du deuxième peigne.

6. Système selon l'une des revendications précédentes dans lequel l'oscillateur harmonique quantique (3) est un premier résonateur micro-onde supraconducteur,

> le dispositif de stabilisation (10) comprenant :

> > - un transmon (12),
> > - un deuxième résonateur micro-onde supraconducteur (14) ayant un facteur de qualité inférieur à un facteur de qualité du premier résonateur micro-onde supraconducteur, et
> > - un exciteur (16) adapté pour émettre les premier et deuxième peignes de fréquences (17, 18),

le dispositif de dissipation multiphotonique (20) comprenant :

- un dissipateur (22) tel qu'un troisième résonateur micro-onde supraconducteur ayant un facteur de qualité inférieur à un facteur de qualité du premier résonateur micro-onde supraconducteur,
- une source de pompage (26) et
- un circuit de couplage (24) adapté pour coupler le dissipateur et l'oscillateur, le dispositif de dissipation étant activable lorsque le circuit de couplage reçoit une énergie de pompage (27) de la source de pompage.

7. Procédé de commande d'un état d'un oscillateur harmonique quantique comprenant les étapes simultanées suivantes :

- stabilisation d'une parité prédéterminée d'un nombre de bosons d'un état de type chat de Schrödinger de l'oscillateur, la stabilisation comprenant une génération des premier et deuxième peignes de fréquences, les premier et deuxième peignes de fréquence comportant chacun au moins autant de raies qu'un nombre moyen de bosons dans l'état de l'oscillateur de type chat de Schrödinger, et
- dissipation multiphotonique de sorte à retirer au moins une paire de bosons simultanément de l'oscillateur,

la dissipation multiphotonique étant activée seulement sur des périodes d'activation comprises entre deux pics temporels successifs des premier et deuxième peignes de fréquences,

la période d'activation présentant une durée supérieure à l'inverse du produit du nombre moyen de bosons dans l'état de l'oscillateur de type chat de Schrödinger et de l'inverse du temps caractéristique séparant le retrait d'au moins une paire de bosons simultanément de l'oscillateur par dissipation multiphotonique, une durée séparant deux périodes d'activation successives étant inférieure à un temps caractéristique de perte d'un boson dans l'oscillateur harmonique.

**Patentansprüche**

1. System (1) zur Steuerung eines Zustands eines harmonischen Quantenoszillators, umfassend:

- einen harmonischen Quantenoszillator (3), der so konfiguriert ist, dass er eine Information in einem Schrödingers-Katze-Zustand des Oszillators codiert übermittelt,
- eine Vorrichtung zur Stabilisierung (10) einer vorbestimmten Parität einer Anzahl von Bosonen des Zustands, die so konfiguriert ist, dass sie einen ersten und einen zweiten Frequenzkamm verwendet, wobei der erste und der zweite Frequenzkamm jeweils mindestens ebenso viele Linien umfassen wie eine mittlere Anzahl von Bosonen im Schrödingers-Katze-Zustand des Oszillators, und

- eine Multiphotonen-Dissipationsvorrichtung (20), die geeignet ist, mindestens ein Bosonenpaar gleichzeitig aus dem Oszillator zu entfernen,

wobei die Multiphotonen-Dissipationsvorrichtung so eingerichtet ist, dass sie nur über Aktivierungszeiträume aktiviert wird, die zwischen zwei aufeinanderfolgenden zeitlichen Spitzen des ersten und des zweiten Frequenzkamms umfasst sind,

wobei der Aktivierungszeitraum eine Dauer aufweist, die größer ist als der Kehrwert des Produkts aus der mittleren Anzahl von Bosonen im Schrödingers-Katze-Zustand des Oszillators und dem Kehrwert der charakteristischen Zeit, die das gleichzeitige Entfernen mindestens eines Bosonenpaares aus dem Oszillator durch Multiphotonen-Dissipation trennt,

wobei eine Dauer, die zwei aufeinanderfolgende Aktivierungszeiträume trennt, kleiner ist als eine charakteristische Verlustzeit eines Bosons im harmonischen Oszillator.

2. System nach Anspruch 1, wobei die Aktivierungszeiträume so angepasst sind, dass eine Lokalisierung des Zustands in einer modifizierten Wigner-Darstellung während der Aktivierungszeiträume der Stabilisierungsvorrichtung durch die Dissipationsvorrichtung wiederhergestellt wird.

3. System nach Anspruch 1 oder 2, wobei ein erster Frequenzabstand, der zwei aufeinanderfolgende Linien des ersten Frequenzkamms trennt, und ein zweiter Frequenzabstand, der zwei aufeinanderfolgende Linien des zweiten Kamms trennt, größer sind als der Kehrwert der charakteristischen Verlustzeit eines Bosons im harmonischen Oszillator.

4. System nach einem der Ansprüche 1 bis 3, wobei ein erster Frequenzabstand, der zwei aufeinanderfolgende Linien des ersten Frequenzkamms trennt, gleich dem Doppelten eines zweiten Frequenzabstands ist, der zwei aufeinanderfolgende Linien des zweiten Kamms trennt.

5. System nach einem der Ansprüche 1 bis 4, wobei der erste und der zweite Kamm Spitzen im Zeitbereich aufweisen, wobei die Spitzen des ersten Kamms in Bezug auf die Spitzen des zweiten Kamms zeitlich versetzt sind.

**6.** System nach einem der vorstehenden Ansprüche, wobei der harmonische Quantenoszillator (3) ein erster supraleitender Mikrowellenresonator ist,

wobei die Stabilisierungsvorrichtung (10) umfasst:

- ein Transmon (12),
- einen zweiten supraleitenden Mikrowellenresonator (14), der einen Qualitätsfaktor aufweist, der kleiner ist als ein Qualitätsfaktor des ersten supraleitenden Mikrowellenresonators, und
- einen Erreger (16), der geeignet ist, den ersten und den zweiten Frequenzkamm (17, 18) zu emittieren,

wobei die Multiphotonen-Dissipationsvorrichtung (20) umfasst:

- einen Dissipator (22), wie etwa einen dritten supraleitenden Mikrowellenresonator, der einen Qualitätsfaktor aufweist, der kleiner ist als ein Qualitätsfaktor des ersten supraleitenden Mikrowellenresonators,
- eine Pumpquelle (26), und
- eine Kopplungsschaltung (24), die geeignet ist, den Dissipator und den Oszillator zu koppeln, wobei die Dissipationsvorrichtung aktiviert werden kann, wenn die Kopplungsschaltung eine Pumpenergie (27) von der Pumpquelle empfängt.

**7.** Verfahren zum Steuern eines Zustands eines harmonischen Quantenoszillators, das die folgenden gleichzeitigen Schritte umfasst:

- Stabilisieren einer vorbestimmten Parität einer Anzahl von Bosonen eines Schrödingers-Katze-Zustands des Oszillators, wobei das Stabilisieren ein Erzeugen des ersten und des zweiten Frequenzkamms umfasst, wobei der erste und der zweite Frequenzkamm jeweils mindestens ebenso viele Linien umfassen wie eine mittlere Anzahl von Bosonen im Schrödingers-Katze-Zustand des Oszillators, und
- Multiphotonen-Dissipation, um mindestens ein Bosonenpaar gleichzeitig aus dem Oszillator zu entfernen,

wobei die Multiphotonen-Dissipation nur über Aktivierungszeiträume aktiviert wird, die zwischen zwei aufeinanderfolgenden zeitlichen Spitzen des ersten und des zweiten Frequenzkamms umfasst sind,

wobei der Aktivierungszeitraum eine Dauer aufweist, die größer ist als der Kehrwert des Produkts aus der mittleren Anzahl von Bosonen im Schrödingers-Katze-Zustand des Oszillators und dem Kehrwert der charakteristischen Zeit, die das gleichzeitige Entfernen mindestens eines Bosonenpaares aus dem Oszillator durch Multiphotonen-Dissipation trennt, wobei eine Dauer, die zwei aufeinanderfolgende Aktivierungszeiträume trennt, kleiner ist als eine charakteristische Verlustzeit eines Bosons im harmonischen Oszillator.

## Claims

**1.** A control system (1) for a state of a quantum harmonic oscillator, comprising:

- a quantum harmonic oscillator (3) configured to carry encoded information in a Schrödinger's cat type state of the oscillator,
- a stabilisation device (10) for a predetermined parity of a number of bosons of the state, which device is configured to use first and second frequency combs, the first and second frequency combs each including at least as many rays as a mean number of bosons in the Schrödinger's cat type state of the oscillator, and
- a multi-photon dissipation device (20) arranged to remove at least one pair of bosons simultaneously from the oscillator,

the multi-photon dissipation device being arranged such that it is activated only over activation periods between two successive time peaks of the first and second frequency combs,

the activation period having a duration which is greater than the inverse of the product of the mean number of bosons in the Schrödinger's cat type state of the oscillator and the inverse of the characteristic time separating the removal of at least one pair of bosons simultaneously from the oscillator by multi-photon dissipation,

a duration separating two successive activation periods being less than a characteristic loss time of a boson in the harmonic oscillator.

**2.** The system according to claim 1, wherein the activation periods are adjusted such that a localisation of the state in a Wigner representation modified during the activation periods of the stabilisation device is restored by the dissipation device.

**3.** The system according to claim 1 or 2, wherein a first frequency deviation separating two successive rays of the first frequency comb and a second frequency deviation separating two successive rays of the second comb are greater than the inverse of the characteristic loss time of a boson in the harmonic oscillator.

**4.** The system according to one of claims 1 to 3, wherein a first frequency deviation separating two successive rays of the first frequency comb is equal to twice a second frequency deviation separating two successive rays of the second comb.

5. The system according to one of claims 1 to 4, wherein the first and second combs have peaks in the time domain, the peaks of the first comb being time-shifted relative to the peaks of the second comb.

6. The system according to one of the preceding claims, wherein the quantum harmonic oscillator (3) is a first superconducting microwave resonator,

   the stabilisation device (10) comprising:

   - a transmon (12),
   - a second superconducting microwave resonator (14) having a quality factor which is lower than a quality factor of the first superconducting microwave resonator, and
   - an exciter (16) arranged to emit the first and second frequency combs (17, 18),

   the multi-photon dissipation device (20) comprising:

   - a dissipator (22) such as a third superconducting microwave resonator having a quality factor which is lower than a quality factor of the first superconducting microwave resonator,
   - a pump source (26) and
   - a coupling circuit (24) arranged to couple the dissipator and the oscillator, the dissipation device being able to be activated when the coupling circuit receives a pump energy (27) from the pump source.

7. A method for controlling a state of a quantum harmonic oscillator comprising the following simultaneous steps:

   - stabilisation of a predetermined parity of a number of bosons of a Schrödinger's cat type state of the oscillator, the stabilisation comprising a generation of the first and second frequency combs, the first and second frequency combs each including at least as many rays as a mean number of bosons in the Schrödinger's cat type state of the oscillator, and
   - multi-photon dissipation so as to remove at least one pair of bosons simultaneously from the oscillator,

   the multi-photon dissipation being activated only over activation periods between two successive time peaks of the first and second frequency combs,

   the activation period having a duration which is greater than the inverse of the product of the mean number of bosons in the Schrödinger's cat type state of the oscillator and the inverse of the characteristic time separating the removal of at least one pair of bosons simultaneously from the oscillator by multi-photon dissipation, a duration separating two successive activation periods being less than a characteristic loss time of a boson in the harmonic oscillator.

Fig.1

Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2009795

**Littérature non-brevet citée dans la description**

- **LESCANNE, R. ; VILLIERS, M. ; PERONNIN, T. et al.** Exponential suppression of bit-flips in a qubit encoded in an oscillator. *Nat. Phys.,* 2020, vol. 16, 509-513
- **GERTLER JEFFREY M. et al.** *Protecting a Bosonic Qubit with Autonomous Quantum Error Correction, <https : / /arxiv.org/abs/2004.09322*
- **FOSEL THOMAS et al.** *Efficient cavity control with SNAP gates, https://arxiv.org/abs/2004.14256*
- **GERTLER JEFFREY M. et al.** *Protecting a Bosonic Qubit with Autonomous Quantum Error Correction, <https://arxiv.org/abs/2004.09322>*